Europäisches Patentamt

European Patent Office

Office européen des brevets

(11) Veröffentlichungsnummer: **0 262 316**
**A2**

## (12) EUROPÄISCHE PATENTANMELDUNG

(21) Anmeldenummer: 87110256.2

(22) Anmeldetag: 16.07.87

(51) Int. Cl.⁴: **B60R 13/02** , B29C 67/14 , D04H 3/00

(30) Priorität: 28.08.86 DE 3629230

(43) Veröffentlichungstag der Anmeldung:
06.04.88 Patentblatt 88/14

(84) Benannte Vertragsstaaten:
**DE ES FR GB IT SE**

(71) Anmelder: **ERPE - Ernst Pelz - Vertriebs GmbH + Co. - Verwaltungs KG**
**Nr. 60**
**D-8581 Vorbach Oberpfalz(DE)**

(72) Erfinder: **Pelz, Peter**
**Dieselweg 10**
**D-8192 Geretsried 2(DE)**

(74) Vertreter: **Goddar, Heinz J., Dr. et al**
**FORRESTER & BOEHMERT**
**Widenmayerstrasse 4/l**
**D-8000 München 22(DE)**

(54) **Verfahren zum Herstellen eines Verkleidungsteiles sowie danach hergestelltes Verkleidungsteil.**

(57) Verfahren zum Herstellen eines Verkleidungstei-les, insbesondere eines Abdeckteiles, bei dem ein ein-oder mehrlagiger Faserstoff aus je etwa 50 Gew.-% Acrylfasern und 50 Gew.-% Polyesterfasern dadurch in der Hitzebeständigkeit verbessert wird, daß ihm Glasfasern zugesetzt werden und der weiter mit Bindemittel beschichtet und in einer Formpresse zusammengepreßt wird, wobei das mit Bindemittel beschichtete Faserstoffmaterial nach dem Beschichten im wesentlichen luftdicht für einen Zeitraum von bis zu 12 Stunden aufbewahrt und alsdann dem Formpreßvorgang unterworfen wird.

EP 0 262 316 A2

# Verfahren zum Herstellen eines Verkleidungsteiles sowie danach hergestelltes Verkleidungsteil

Die Erfindung betrifft ein Verfahren zum Herstellen eines Verkleidungsteiles, das aus einem ein ein-oder mehrlagiger Faservlies mit etwa 50 Gew.-% Acryl-und 50 Gew.-% Polyesterfaser besteht und in einer Formpresse zusammengepreßt wird.

Aus der DE-OS 29 37 399 ist ein Verfahren der vorstehend beschriebenen Art zum Herstellen eines Verkleidungsteiles für Fahrzeuge bekannt, bei dem der Faservliesstoff, der vorzugsweise einen Gehalt an Acryl-und/ oder Polyesterfaser aufweist, nach dem Beschichten mit dem Bindemittel in der Formpresse bei einer Preß temperatur zwischen 100°C und 150°C unter einem Preßdruck von 6 bis 10 kg/cm² über eine Preßzeit von 1,5 bis 6 Minuten auf eine Enddicke des Fertigerzeugnisses von 1 bis 2,5 mm zusammengepreßt wird, wobei die gesamte(n) Faservliesstofflage(n) ein Gewicht von 400 bis 440 g/m² Gesamtfläche und mm Enddicke des Fertigerzeugnisses und eine Anfangsdicke von 3 bis 4 mm pro 1mm Enddicke des Fertigerzeugnisses hat/haben und das Bindemittel in einer Menge von ca. 400 g/m² Gesamtfläche und mm Enddicke des Fertigerzeugnisses eingesetzt wird. Bei dem bekannten Verfahren werden hierbei zwei Faservliesstofflagen aus etwa 50 Gew.-% Acryl-und etwa 50 Gew.-% Polyesterfasern jeweils einseitig mit dem Bindemittel beschichtet und daraufhin sogleich dem Formpreßvorgang unterworfen werden. Die unverzügliche Verarbeitung des beschichteten Faservliesstoffmaterials ist dabei wichtig, weil das Bindemittel unter dem Einfluß der Luftatmosphäre bei Raumtenperatur sogleich auszuhärten beginnt, so daß nach längerem Zuwarten kein befriedigendes Ausstattungsteil im Formpreßvorgang mehr erhalten werden kann. Dies ist insoweit ungünstig, als die innerbetrieblichen Fertigungsvorgänge dadurch zeitlichen Vorgaben unterliegen, welche die Herstellung des bekannten Ausstattungsteiles nicht so kostengünstig gestalten, wie dies an sich wünschenswert wäre.

Der Erfindung liegt daher die Aufgabe zugrunde, das gattungsgemäß Verfahren dahingehend weiterzubilden, daß die Verarbeitkeit der beschichteten Fasermatten vor dem Preßvorgang verlängert wird, wobei ein Produkt mit verbesserten technischen Eigenschaften, insbesondere verbesserter Hitzebeständigkeit, geschaffen werden soll.

Erfindungsgemäß wird diese Aufgabe in Weiterbildung des gattungsgemäßen Verfahrens dadurch gelöst, daß dem Vlies Glasfasern in einer Menge von 0 - 100 Gew.-% zugesetzt werden.

Vorzugsweise wird das mit dem Bindemittel beschichtete Faserstoffmaterial nach dem Beschichten im wesentlichen luftdicht für einen Zeitraum von bis zu 12 Stunden aufbewahrt und alsdann dem Preßvorgang unterworfen.

Dabei kann vorgesehen sein, daß das Faserstoffmaterial nach dem Beschichten in einer luftdichten Kiste oder dergleichen aufbewahrt wird.

Schließlich betrifft die Erfindung auch ein nach dem beanspruchten Verfahren hergestelltes Verkleidungteil.

Dem erfindungsgemäßen Verfahren, welches sich im übrigen auch in besonders vorteilhafter Weise, unter entsprechender Anpassung, für die Realisierung eines Verfahrens eignet, welches Gegenstand der deutschen Patentanmeldung P .. .. ... (gleicher Anmeldetag, Anwaltsakte PXP 1119) ist, liegt die überraschende Erkenntnis zugrunde, daß es gelingt, die Probleme der bisherigen Verfahrensführung dadurch zu beheben, daß das beschichtete Faserstoffmaterial gegen Atmosphäreneinfluß durch im wesentlichen luftdichten Abschluß geschützt wird. Dies kann in einfachter Weise so erfolgen, daß das Faserstoffmaterial nach dem Abziehen von einer Vorratsrolle ein-oder beseitig beschichtet, d. h. mit dem Bindemittel imprägniert wird, woraufhin die Rolle beschichteten Faserstoffmaterials in eine luftdichte Kiste oder dergleichen eingebracht wird. Es hat sich gezeigt, daß bereits ein derartiges "Ein packen" also ohne besondere Maßnahmen zum Verschließen etwaiger Öffnungen usw., vollkommen ausreicht, um das beschichtete Faserstoffmaterial für bis zu 12 Stunden aufbewahren, innerhalb des Betriebes transportieren und erst dann dem Formpreßvorgang zuführen zu können. Hiermit lassen sich beträchtliche Vorteile hinsichtlich des Arbeitsablaufes und der kostengünstigen Fertigung erzielen.

Nachstehend ist ein Ausführungsbeispiel der Erfindung erläutert:

Ein Faservliesstoff, bestehend zu 50 Gew.-% aus Polyesterfasern und zu 50 Gew.-% aus Acrylfasern, wurde beidseitig mit modifiziertem Polyesterharz beschichtet, wobei die Gesamtmenge 800 g/m² betrug. Das Beschichten erfolgte in der Weise, daß das Faservlies von einer Vorratssrolle abgezogen und alsdann beidseits rollenbeschichtet wurde. Das beschichtete Faservlies wurde unmittelbar im Anschluß an den Beschichtungsvorgang in eine luftdichte Kiste eingepackt. Nach einer Wartezeit von 8 Stunden wurde das Faservlies zugeschnitten und abschnittsweise einem Formpreßvorgang unterworfen, wie er in der DE-OS 29 37 399 beschrieben ist. Dabei wurde ein einwandfreies Verkleidungsteil erhalten.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Ansprüche

1. Verfahren zum Herstellen eines Verkleidungsteiles, das aus einem ein-oder mehrlagigen Faservlies mit etwa 50 Gew.-% Acryl-und etwa 50 Gew.-% Polyesterfasern besteht, dadurch gekennzeichnet, daß dem Vlies Glasfasern in einer Menge von 0 - 100 Gew.-% zugesetzt werden.

2. Verfahren nach Anspruch 1, dadurch gekennzeichnet, daß der Faserstoff mit einem aus modifiziertem Polyesterharz oder dergleichen bestehenden Bindemittel beschichtet und in einer Formpresse zusammengepreßt wird, dadurch gekennzeichnet, daß das mit Bindemittel beschichtete Faserstoffmaterial nach dem Beschichten im wesentlichen luftdicht für einen Zeitraum von bis zu 12 Stunden aufbewahrt und alsdann dem Formpreßvorgang unterworfen wird.

3. Verfahren nach Anspruch 1 oder 2, dadurch gekennzeichnet, daß das Faserstoffmaterial nach dem Beschichten in eine im wesentlichen luftundurchlässigen Kiste oder dergleichen eingebracht wird.

4. Verkleidungsteil, hergestellt nach dem Verfahren nach einem der vorangehenden Ansprüche.